# EUROPÄISCHE PATENTANMELDUNG

(11) **EP 1 111 325 A2**
(43) Veröffentlichungstag der Anmeldung: **27.06.2001**
(21) Anmeldenummer: 00104788.5
(22) Anmeldetag: 06.03.2000
(51) Int. Cl.: F41H 5/04, C22C 38/00, B32B 15/01

(54) **Verbundstahlblech, insbesondere zum Schutz von Fahrzeugen gegen Beschuss**

(30) Priorität: 22.12.1999 DE 19961948
(71) Anmelder: Aktiengesellschaft der Dillinger Hüttenwerke, 66763 Dillingen (DE)
(72) Erfinder: Dilg, Christoph Dr. Dipl.-Ing., 66763 Dillingen (DE); Hofmann, Uwe Dipl.-Ing., 66701 Beckingen (DE); Just, Claus Dr. Dipl. Ing., 66763 Dillingen (DE); Rögele, Hans-Jürgen Dipl.-Kfm., 66763 Dillingen (DE); Schönberger, Helmut Techn., 66740 Saarlouis-Beaumarais (DE); Vogt, Jürgen Techn., 66763 Dillingen Diefflen (DE)
(74) Vertreter: Bernhardt, Winfrid, Dr.-Ing.

(57) **Zusammenfassung**

In einem Verbundstahlblech aus martensitaushärtendem Stahl zum Schutz von Personen-und Werttransportfahrzeugen gegen Beschuß und Einwirkung von Explosivstoffen ist zwischen einer härteren Außenlage und einer zäheren Innenlage eine dünne Zwischenlage angeordnet. Die Zwischenlage besteht beispielsweise aus Nickel und hat eine Dicke von 1/100 bis 1 mm.

Die Zwischenlage ist nicht vorgesehen, um als Bindemittel zur weiteren Verfestigung der Verbindung zu dienen.
Es wird davon ausgegangen, daß die durch den Aufprall des Geschosses erzeugten transversalen Schwingungen des Bleches und von der Auftreffstelle aus sich in dem Blech ausbreitenden transversalen und longitudinalen Wellen räumlich und zeitlich solchergestalt zusammentreffen können, daß an bestimmten Stellen besonders hohe. Ablösungen bewirkende Zugspannungen entstehen, wobei auch schon die longitudinalen Wellen für sich in dem Zweilagenstahl infolge ihrer Aufteilung an der Grenzfläche in einen durchgehenden und einen zurückgeworfenen Teil und die Reflektion an den beiden Oberflächen durch Zusammentreffen der fortlaufenden Teilwellen an der Grenzfläche Spannungsspitzen bilden können.
Letzteren Einfluß baut die Zwischenlage ab.

## Beschreibung

Die Erfindung bezieht sich auf ein Verbundstahlblech aus martensitaushärtendem Stahl, insbesondere zum Schutz von Fahrzeugen, insbesondere Personen- und Werttransportfahrzeugen, gegen Beschuß und Einwirkung von Explosivstoffen, mit einer härteren Außenlage und einer zäheren Innenlage.

Ein solches Verbundstahlblech ist aus der DE 43 44 879 C2 bekannt.

Eine Abwandlung und Weiterentwicklung eines solchen Bleches ist in der älteren Patentanmeldung 199 21 961.3 beschrieben. Nach dieser Patentanmeldung wird der Stahl der Innenlage mit einer chemischen Zusammensetzung in Gew.-% von C ≤ 0,01, Si ≤ 0,1, Mn ≤ 0,1, P ≤ 0,005, S ≤ 0,005, Cu ≤ 0,1, Mo 4,80 bis 5,20, Ni 17,5 bis 18,5, Cr ≤ 0,1, Ti 0,55 bis 0,70, Co 8,0 bis 9,0 sowie ggf. Al 0.05 bis 0,15, und der Stahl der Außenlage mit einer, unter Reinigung durch Zonenumschmelzen erhaltenen, chemischen Zusammensetzung in Gew.-% von C ≤ 0,01, Si ≤ 0,1, Mn 0,02 bis 0,20, P ≤ 0,005, S ≤ 0,005, Cu 0,01 bis 0,20, Mo 4,80 bis 5,20, Ni 17,5 bis 18,5, Cr 0,01 bis 0,20, Ti 1,80 bis 1,95, Co 14,0 bis 15,5, Al 0,05 bis 0,15, Rest jeweils Fe und herstellungsbedingte Verunreinigungen, erzeugt. Der Stahl der Außenlage ist damit weitgehend frei von oxidischen Einschlüssen, die nach der betreffenden Erfindungsvorstellung wegen ihrer jedenfalls bei der Beanspruchung des Stahles beim Beschuß nicht zu vernachlässigenden rißauslösenden Kerbwirkung möglichst vermieden werden sollten. Das solchermaßen hergestellte Verbundstahlblech erfüllt besonders hohe Anforderungen.

Allgemein besteht bei den Verbundstahlblechen der betrachteten Art eine Neigung der spröden Außenlage, sich in einem Abstand von etwa 5 bis 10 cm von einem Treffer von der zäheren Innenlage abzulösen und ggf. ganz abzuplatzen. Ein solches Ablösen kann trotz nachweislich fester Bindung zwischen den beiden Lagen auftreten.
Zwar liegen weitere Auftreffpunkte dann nach der Wahrscheinlichkeit in aller Regel an anderen Stellen. Trifft ein Geschoß jedoch auf eine Abplatzung, kann die hier allein noch vorhandene Innenlage es nicht halten.

Der Erfindung liegt die Aufgabe zugrunde, die Widerstandsfähigkeit eines Verbundstahles gegen Ablösen der Außenlage zu erhöhen.

Gemäß der Erfindung wird dieser Zweck dadurch erfüllt, daß zwischen der Außenlage und der Innenlage eine dünne Zwischenlage angeordnet ist.

Die Zwischenlage ist nicht vorgesehen, um als Bindemittel zur weiteren Verfestigung der Verbindung zu dienen.
Die Erfindung geht davon aus, daß die durch den Aufprall des Geschosses erzeugten transversalen Schwingungen des Bleches und von der Auftreffstelle aus sich in dem Blech ausbreitenden transversalen und longitudinalen Wellen räumlich und zeitlich solchergestalt zusammentreffen können, daß an bestimmten Stellen besonders hohe, die Ablösungen bewirkende Zugspannungen entstehen, wobei auch schon die longitudinalen Wellen für sich in dem Zweilagenstahl infolge ihrer Aufteilung an der Grenzfläche in einen durchgehenden und einen zurückgeworfenen Teil und die Reflektion an den beiden Oberflächen durch Zusammentreffen der fortlaufenden Teilwellen an der Grenzfläche Spannungsspitzen bilden können.
Letzteren Einfluß baut die Erfindung ab, indem sie in der dünnen Zwischenschicht ein System entsprechend häufiger reflektierter Teilwellen schafft, das das in dem Zweilagenstahl mögliche Zusammenspiel der in den beiden Lagen verlaufenden Wellen durch einen dazwischengelegten Störbereich verhindert.

Die Zwischenlage besteht beispielsweise aus einer Nickelfolie, wie sie als Kohlenstoffdiffusionssperre in Verbundstahlblechen für den Behälterbau u.a. eingesetzt wird. Ebenso kommt aber auch ein hochzäher mikrolegierter Baustahl in Betracht.

Die Dicke der Zwischenlage kann sehr gering sein. Je nach Material wird sie zwischen 1/100 mm und 1 mm liegen.

Die Verbindung der drei Lagen wird nach entsprechender Vorbereitung der Oberflächen vorzugsweise in einem Arbeitsgang durch Walzplattieren vorgenommen. Abhängig von dem Material und der Dicke der Zwischenlage kommen jedoch auch die anderen Plattiertechniken in Frage.

Zur Vorbereitung des Walzplattierens sollten an den beiden zu verbindenden Stahlplatten durch eine spanabhebende Bearbeitung, wie Hobeln oder Fräsen, metallische Berührungsflächen geschaffen werden. Darüber hinaus sollten die Platten vor dem Walzplattieren am Rand umlaufend dicht miteinander verschweißt werden und es sollte ein hohes Vakuum zwischen den beiden Platten erzeugt werden.

Die vorliegende Erfindungsmaßnahme kann in vorteilhafter Weise mit derjenigen nach der erwähnten Patentanmeldung 199 21 961.3 kombiniert werden.
Ebenso kann sie zugleich mit der in der älteren Patentanmeldung 198 57 156.9 beschriebenen Maßnahme angewandt werden, im Anschluß an das Aushärten zusätzlich eine Oberflächenhärtung vorzunehmen bei einer Temperatur, die gleichfalls unter der Umwandlungstemperatur Martensit → Austenit liegt.

Im folgenden sei die Erfindung anhand von Beispielen weiter verdeutlicht.

### Beispiel 1

Ein Verbundstahlblech wurde wie folgt hergestellt:
Für die Innenlage wurde in einem Vakuuminduktionsofen ein Stahl erschmolzen, der nach Zonenumschmelzen in einem Vakuumlichtbogenofen in Gew.-% 4,91 Mo, 17,75 Ni, 0,034 Cr, 0,60 Ti, 8,40 Co, 0,007 C, 0,038 Si, 0,032 Mn, 0,002 P, 0,005 S, 0,013 Cu und 0,105 Al aufwies.
Für die Außenlage wurde, gleichfalls im Vakuuminduktionsofen, ein Stahl erschmolzen, der nach Zonenumschmelzen im Vakuumlichtbogenofen in Gew.-% 4,93 Mo, 17.95 Ni, 0,037 Cr, 1,85 Ti, 14,19 Co, 0,006 C, 0,035 Si, 0,032 Mn, 0,003 P, 0,003 S, 0,018 Cu und 0,095 Al aufwies.
Die erhaltenen Blöcke wurden zunächst zu Brammen gewalzt, deren Dicke dem Dickenverhältnis der Lagen im Blech entsprachen, nämlich Innenlage zu Außenlage 1:2.
Die Brammen wurden zur Bildung metallischer Berührungsflächen an einer Seite abgefräst und gesäubert, mit den Berührungsflächen, auf der Hälfte unter Zwischenlegung einer Nickelfolie von 0,02 mm Dicke, zusammengelegt und ringsum dicht verschweißt. Der von der Schweißnaht eingeschlossene, unvermeidliche Restraum zwischen den Berührungsflächen wurde evakuiert. Dann wurden die Teile durch Walzplattieren miteinander verbunden. Die Zusammensetzung des Nickels betrug 0,01% Mo, 0,01% Cr, 0,04% Ti, 0,06% Co, 0,007% C, 0,01% Si, 0,11% Mn, 0,005% P, 0,001% S, Rest Nickel. Es wurde ein Blech von 9,1 mm Dicke ausgewalzt.

Das Blech wurde lösungsgeglüht. Nach dem Zuschneiden von Probestücken wurden diese durch Auslagerung gehärtet.

Es war ein fester Verbundstahl entstanden mit folgenden Härten.

| Härte [HRC] | | | |
|---|---|---|---|
| Außenlage | 59,9 | 60,9 | 60,5 |
| Innenlage | 51,5 | 49,8 | 49,9 |

Die Widerstandsfähigkeit gegen Beschuß wurde an Proben von 300 x 300 mm² Fläche, die zum Teil im dreilagigen und zum Teil im zweilagigen Bereich des Bleches ausgeschnitten waren, in einem Beschußamt nach der EN 1522 Beschußklasse FB7 mit Vollmantel-Hartkernmunition vom Kaliber 7,62x51 untersucht.

### Ergebnis:

Insgesamt hat das dreilagige Blech von 18 Schüssen alle 18 Schüsse gehalten.

Außer unmittelbar an den Auftreffstellen zeigte das Blech keine Schädigungen.

Das zweilagige Blech hat von 6 Schüssen 5 Schüsse gehalten, 1 Durchschuß entstand.

Die Außenlage wies größere Abplatzungen auf.

An einer teils zweilagigen und teils dreilagigen Probe platzte die Außenschicht des zweilagigen Bereichs bei Belegung mit drei Schüssen, die gehalten wurden, vollflächig bis an die Grenze zum dreilagigen Bereich ab. Diese hielt anschließend 6 Schüsse und zeigte darauf außer an den Auftreffstellen keine Beschädigung.

Der Versuch war als Vergleichsversuch angelegt zur Demonstration der mit der Zwischenschicht erzielten Verbesserung. Das zweilagige Blech hätte an sich mit besserer Haltbarkeit hergestellt werden können.

### Beispiel 2

Teile des Bleches von Beispiel 1 wurden an der Innenlage wie an der Außenlage auf 8,5 mm Dicke abgearbeitet, wobei das Dickenverhältnis 1:2 der beiden Lagen erhalten blieb.

Zum Teil im dreilagigen und zum Teil im zweilagigen Bereich des Bleches ausgeschnittene Proben von 300 x 300 mm Größe wurden wie in Beispiel 1 beschossen.

### Ergebnis:

Insgesamt hat das dreilagige Blech von 6 Schüssen alle 6 Schüsse gehalten.

Außer unmittelbar an den Auftreffstellen zeigte das Blech keine Schädigungen.

Das zweilagige Blech hat von 5 Schüssen 2 Schüsse gehalten, es entstanden 3 Durchschüsse.

Die Außenlage wies größere Abplatzungen auf.

## Patentansprüche

1. Verbundstahlblech aus martensitaushärtendem Stahl, insbesondere zum Schutz von Fahrzeugen, insbesondere Personen- und Werttransportfahrzeugen, gegen Beschuß und Einwirkung von Explosivstoffen, mit einer härteren Außenlage und einer zäheren Innenlage,
dadurch gekennzeichnet,
daß zwischen der Außenlage und der Innenlage eine dünne Zwischenlage angeordnet ist.

2. Verbundstahlblech nach Anspruch 1,
dadurch gekennzeichnet,
daß die Zwischenlage eine Dicke von 1/100 bis 1 mm hat.

3. Verbundstahlblech nach Anspruch 1 oder 2,
dadurch gekennzeichnet,
daß die Zwischenlage aus Nickel besteht.

4. Verbundstahlblech nach Anspruch 1 oder 2,
dadurch gekennzeichnet,
daß die Zwischenlage aus einem hochzähen mikrolegierten Baustahl besteht.

5. Verbundstahlblech nach einem der Ansprüche 1 bis 4,
dadurch gekennzeichnet,
daß die drei Lagen, vorzugsweise in einem Arbeitsgang, durch Walzplattieren verbunden werden.
